# EUROPEAN PATENT SPECIFICATION

(11) **EP 4 098 343 B1**
(45) Date of publication and mention of the grant of the patent: **05.11.2025**
(21) Application number: 20916429.2
(22) Date of filing: 10.09.2020
(51) Int. Cl.: B01D 21/01, B03D 3/06, C02F 1/00, C02F 103/18, C02F 1/56, C21C 5/40, F27D 17/00, C02F 1/52

(54) **METHOD FOR TREATING DUST-COLLECTED WATER FOR EXHAUST GAS IN CONVERTER, AND DEVICE FOR TREATING DUST-COLLECTED WATER FOR EXHAUST GAS IN CONVERTER**
VERFAHREN ZUR BEHANDLUNG VON STAUBGESAMMELTEM WASSER FÜR ABGAS IN EINEM KONVERTER UND VORRICHTUNG ZUR BEHANDLUNG VON STAUBGESAMMELTEM WASSER FÜR ABGAS IN EINEM KONVERTER
PROCÉDÉ DE TRAITEMENT D'EAU DÉPOUSSIÉRÉE POUR LES GAZ D'ÉCHAPPEMENT DANS UN CONVERTISSEUR, ET DISPOSITIF DE TRAITEMENT D'EAU DÉPOUSSIÉRÉE POUR LES GAZ D'ÉCHAPPEMENT DANS UN CONVERTISSEUR

(30) Priority: 31.01.2020 JP 2020015539
(43) Date of publication of application: 07.12.2022
(73) Proprietor: Kurita Water Industries Ltd., Tokyo 164-0001 (JP)
(72) Inventor: KIKKAWA Takashi, Tokyo 164-0001 (JP); HIRANO Youichi, Tokyo 164-0001 (JP)
(74) Representative: TBK
(86) International application number: PCT/JP2020/034300
(87) International publication number: WO 2021/152901

(56) References cited:
- WO-A1-2015/022901
- JP-A- 2000 239 731
- JP-A- 2002 205 076
- JP-A- 2016 194 103
- JP-A- H07 316 622
- JP-A- S 528 663
- JP-A- S53 113 264
- JP-B2- 4 134 914

## Description

### TECHNICAL FIELD

The present invention relates to methods and apparatuses for treating converter exhaust gas dust-collected water, and more particularly, to a treatment method and a treatment apparatus that can efficiently separate dust from converter exhaust gas dust-collected water, using an additive in the treatment of converter exhaust gas dust-collected water.

### BACKGROUND ART

Converters (LD converters: pure oxygen top-blown converters) produce steel by blowing pure oxygen onto molten steel (blowing) to remove carbon from the molten steel. This blowing process produces a large amount of exhaust gas, mainly carbon monoxide, containing dust at a high temperature (about 1,600°C). The exhaust gas is treated with a wet dust collector for dust collection and recovered as LD gas. For the dust-collected water, that has collected dust with the dust collector, coarse dust is first removed with a coarse particle separator, and the rest is subjected to coagulation and settlement in a thickener. The thus separated water is circulated to the dust collector to be repeatedly used for dust collection from the exhaust gas.

The amount of dust in the exhaust gas produced from a converter is considerable. In general, crude steel discharges several kilograms of dust per ton, and 70% to 80% of the dust is iron. The dust is therefore conventionally collected for iron reuse.

Currently, various studies are being conducted to increase the recovery rate from such dust. JP 2005-213635 A discloses a method of adding a polymer flocculant into the dust-collected water that is to be introduced into a coarse particle separator or present in the coarse particle separator. This method can obtain a large amount of coarse dust containing iron with high content.

Further, JP 2005-213635 A discloses a method for treating dust-collected water for waste gas in converter. JP 2000-239731 A discloses a treatment of cooling in vacuum degassing apparatus. JP 2002-205076 discloses a method for purifying raw water with coaguation-sedimentation.

### DISCLOSURE OF THE INVENTION

### Problems to be Solved by the Invention

Converters are intermittently operated. Accordingly, the dust concentration in dust-collected water increases during blowing, while the dust concentration in the dust-collected water decreases during pausing blowing. Thus, the dust concentration in dust-collected water changes with time. If a constant amount of a flocculant is added, the flocculant is insufficient for sufficient coagulation and settlement when the dust concentration is high, and when the dust concentration is low, the addition results in an excessive amount of the flocculant and is uneconomical. In order to efficiently add the additive to separate dust in the treatment of converter exhaust gas dust-collected water, further improvement is desired.

The present invention has been made in view of the above circumstances, and an object is to efficiently separate dust from dust-collected water, using an additive in the treatment of converter exhaust gas dust-collected water.

### Means for Solving the Problems

The present inventors have conducted intensive research to solve the above issue. As a result, the inventors identified a treatment method that can efficiently separate dust from dust-collected water in the method for treating converter exhaust gas dust-collected water, using an additive in the treatment of converter exhaust gas dust-collected water, and thus accomplished the present invention. Specifically, the present invention provides a method as defined in any one of claims 1 to 4 and an apparatus as defined in claim 5 or 6.

### Effects of the Invention

The present invention enables efficient dust separation from dust-collected water, using an additive in the treatment of converter exhaust gas dust-collected water.

### BRIEF DESCRIPTION OF THE DRAWINGS

Figure 1 is a schematic diagram of an apparatus for treating converter exhaust gas dust-collected water according to an embodiment.
Figure 2 is a schematic diagram of an apparatus for treating converter exhaust gas dust-collected water according to another embodiment.
Figure 3 is a schematic diagram of an apparatus for treating converter exhaust gas dust-collected water according to another embodiment.
Figure 4 is a schematic diagram of an apparatus for treating converter exhaust gas dust-collected water according to another embodiment.
Figure 5 is a schematic diagram of an apparatus for treating converter exhaust gas dust-collected water according to another embodiment.
Figure 6 is a graph showing changes with time in water temperature of dust-collected water measured with a contact thermometer and a non-contact thermometer.
Figure 7 is a graph showing the relationship between the water temperature and the dust concentration of dust-collected water.

### PREFERRED MODE FOR CARRYING OUT THE INVENTION

Specific embodiments of the present invention will now be described in detail. However, the present invention is not limited to the following embodiments and may be implemented by appropriately modifying the embodiments within the object of the invention.

### <<Method for Treating Converter Exhaust Gas Dust-Collected Water>>

The method for treating converter exhaust gas dust-collected water according to an embodiment not according to the claimed invention includes measuring the water temperature of dust-collected water containing dust obtained by wet dust collection from a converter exhaust gas, and adding a flocculant to the dust-collected water in a concentration appropriate to the amount of dust in the dust-collected water estimated from the changes in the water temperature.

The converter exhaust gas has a high temperature at the time when introduced into a wet dust collector, and the dust-collected water obtained by wet dust collection also has a high temperature, accordingly. Since the temperature of dust-collected water containing a large amount of dust obtained by treating a large amount of converter exhaust gas is high, the amount of dust in the dust-collected water and the water temperature of the dust-collected water have a correlation. Hence, the amount of dust in the dust-collected water can be estimated from the changes in water temperature of the dust collected water. Thus, a flocculant can be added into the dust-collected water in a concentration appropriate to the estimated amount of dust, reducing the excess or deficiency of the flocculant. In addition, this manner leads to an increased amount of dust collected and a reduced dust concentration of the water that has been subjected to coagulation and settlement in the thickener.

A coarse particle separator 2 is preferably, but not particularly limited to, one that can separate and collect coarse dust with a particle size of 60 µm or more, in general.

Examples of the flocculant include, but are not particularly limited to, anionic flocculants, cationic flocculants, amphoteric flocculants, and nonionic flocculants, and one or more of these may be used. From the viewpoint of increasing the amount of dust collected, anionic flocculants and/or cationic flocculants are preferably used.

Examples of the anionic flocculants include, but are not particularly limited to, acrylic acid, sodium acrylate, methacrylic acid, and sodium methacrylate. One or more of these anionic flocculants may be used.

Examples of the cationic flocculants include, but are not particularly limited to, polydiallyl quaternary ammonium salts, amino poly(meth)acrylates, copolymers of amino poly(meth)acrylates, polyethyleneimines, polyamide polyamines, dihaloalkane polyalkylene polyamine polycondensation products, Mannich-modified polyacrylamide, Hofmann degradation products of polyacrylamide, poly(meth)acrylate polyalkylene polyamine, cationized starch, and chitosan. One or more of these cationic flocculants may be used.

Examples of the nonionic flocculants include, but are not particularly limited to, acrylamide, methacrylamide, and N,N'-dimethyl (meth)acryl. One or more of these nonionic flocculants may be used.

Examples of the amphoteric flocculants include, but are not particularly limited to, polymers formed by combinations of monomers forming the above-cited anionic flocculants, monomers forming the above-cited cationic flocculants, and monomers forming the above-cited nonionic flocculants. One or more of such polymers may be used.

The flocculant may be in any form, for example, in the form of, but not particularly limited to, solid, liquid, gas, or solution.

Normally, the concentration of the flocculant to be added is preferably 0 mg/L to 20 mg/L, more preferably 0.1 mg/L to 10 mg/L, and still more preferably 0.5 mg/L to 5 mg/L.

The thermometer to be used may be, but is not particularly limited to, either a contact thermometer or a non-contact thermometer. Using a contact thermometer for a long period may cause a delay in the response to temperature changes. Therefore, when a contact thermometer is used, the thermometer should be periodically replaced or cleaned to remove scales, depending on the ease of scale formation. Using a non-contact thermometer does not require such periodical cleaning to remove scales. Thus, non-contact thermometers are preferably used. Examples of the non-contact thermometers include, but are not particularly limited to, radiation thermometers, two-color thermometers, and thermographic devices. A turbidimeter may be used to measure dust concentration. However, if scale adheres to the sensing face of the turbidimeter, the accuracy is degraded rapidly. The use of turbidimeters is disadvantageous. Preferably, a contact thermometer and a non-contact thermometer may be used in combination.

The thermometer may be disposed at any position without particular limitation and can be disposed on or above a flow path (a first or a second flow path described later herein) allowing the dust-collected water to flow. The flow path may be defined by a trough, a pipe, or the like. For the flow path defined by a trough, the thermometer is disposed above the trough. For the flow path defined by a pipe, the thermometer is placed on (outside) the pipe. When the flow path is defined by a trough, the infrared energy from the dust-collected water itself can be directly measured. Accordingly, the temperature changes of the dust-collected water can be easily detected compared to the case of using the flow path defined by a pipe.

The water temperature of the dust-collected water changes, for example, within the range of about 40°C to 60°C. For adding the flocculant, the range of temperature changes may be divided into several stages (for example, two or three stages). In a low-temperature stage, the flocculant may be added in a lower concentration, and in a high-temperature stage, the flocculant may be added in a higher concentration.

More specifically, the range of water temperature changes is divided into two: a stage of water temperatures lower than a threshold; and a stage of water temperatures equal to or higher than the threshold, and the concentration of the flocculant to be added at temperatures equal to or higher than the threshold is set higher than the concentration of the flocculant to be added at temperatures lower than the threshold. The threshold may be 42°C to 50°C, for example, 45°C. When the water temperature of the dust-collected water is lower than the threshold, the dust concentration tends to be low. In contrast, when the water temperature of the dust-collected water is lower than the threshold, the dust concentration tends to increase significantly. In such cases, for example, the flocculant may be added in a concentration in the range of 0 mg/L (including the case of no addition) to 2 mg/L at water temperatures lower than the threshold, and the flocculant may be added in a concentration in the range of 3 mg/L to 6 mg/L, preferably more than 4 mg/L and 6 mg/L or less, at water temperatures equal to or higher than the threshold. The concentration is, however, not particularly limited to the above. Thus, when the water temperature is lower than a threshold, a small amount of the flocculant is added to dust at a low content, consequently reducing the flocculant cost. Also, when the water temperature is equal to or higher than the threshold, the dust can be sufficiently coagulated and efficiently separated. Note that even when the dust content is high, a flocculant concentration of more than 6 mg/L can cause the dust to contain much water, making subsequent treatment of dust difficult.

In another implementation, not according to the claimed invention, a reference may be set for the temperature of the dust-collected water so that the concentration of the flocculant to be added can be varied according to the variation (increase or decrease) in temperature relative to the reference. For example, when the water temperature is higher than the reference by 10°C or more, the concentration of the flocculant to be added is increased, and when the water temperature is higher than the reference by 20°C or more, the concentration of the flocculant to be added is further increased.

According to the invention, the relationship between the amount of dust removed or the particle size of the dust and the concentration of the polymer flocculant to be added may be estimated, depending on dust-collected water temperatures, in advance, and the polymer flocculant is added in a minimum concentration at which the dust can be maximumly removed, according to the current water temperature measurement of the dust-collected water.

All the operations in the method for treating converter exhaust gas dust-collected water may be automated using a controller, computer or the like, or manually conducted by an operator.

### [Apparatus for Treating Converter Exhaust Gas Dust-Collected Water]

The apparatus for treating converter exhaust gas dust-collected water according to an embodiment of the present invention is, for example, one that can be used in the above-described method for treating converter exhaust gas dust-collected water. In an embodiment not according to the invention, such an apparatus for treating converter exhaust gas dust-collected water includes a wet dust collector configured to obtain dust-collected water containing dust by wet dust collection from a converter exhaust gas, a thermometer to measure the water temperature of the dust-collected water, a flocculant addition device configured to add a flocculant into the dust-collected water, and a controller configured to calculate the concentration of the flocculant appropriate to the amount of dust in the dust-collected water estimated from changes in the water temperature and order the flocculant addition device to add the flocculant.

The flocculant addition device is intended to add a flocculant into the dust-collected water. The flocculant addition device can be appropriately selected according to the properties of the flocculant and, for example, may be selected from various feeders.

The controller is connected to the thermometer in such a manner as to be able to continuously or intermittently receive temperature data at least from the thermometer. Also, the controller is connected to the flocculant addition device in such a manner as to be able to transmit orders to the flocculant addition device. The controller may be, but is not particularly limited to, a computer.

### <<Specific Implementation of Method for Treating Converter Exhaust Gas Dust-Collected Water>>

A more specific implementation of the method for treating converter exhaust gas dust-collected water applied to an implementation example of the treatment apparatus not according to the claimed invention will now be described. The method for treating converter exhaust gas dust-collected water treats converter exhaust gas dust-collected water by separating coarse dust, in a coarse particle separator, from dust-collected water containing dust obtained by wet dust collection from a converter exhaust gas with a wet dust collector, followed by coagulation and settlement in a thickener. The method includes measuring the water temperature of the dust-collected water at a position of a first flow path allowing the dust-collected water to flow from the outlet of the wet dust collector to a position within the coarse particle separator, and adding a flocculant in a concentration appropriate to the amount of the dust in the dust-collected water estimated from changes in the water temperature into the dust-collected water at at least one position of the first flow path and a second flow path that is from the outlet of the coarse particle separator to a position within the thickener.

### [Specific Implementation of Apparatus for Treating Converter Exhaust Gas Dust-Collected Water]

For the sake of convenience in describing the method for treating converter exhaust gas dust-collected water, an apparatus for treating converter exhaust gas dust-collected water will be described with reference to drawings, and the description of the method for treating converter exhaust gas dust-collected water will be described in combination. An apparatus for treating converter exhaust gas dust-collected water according to an embodiment not according to the claimed invention includes a wet dust collector configured to obtain dust-collected water containing dust by wet dust collection from a converter exhaust gas, a coarse particle separator configured to separate coarse dust from the dust-collected water, a thickener for coagulation and settlement by adding a precipitant, a first flow path allowing the dust-collected water to flow from the outlet of the wet dust collector to a position within the coarse particle separator, a second flow path allowing the dust-collected water to flow from the outlet of the coarse particle separator to a position within the thickener, a thermometer to measure the water temperature of the dust-collected water at a position of the first flow path, a flocculant addition device configured to add a flocculant into the dust-collected water at at least one position of the first flow path and the second flow path, and a controller configured to calculate the concentration of the flocculant appropriate to the amount of the dust in the dust-collected water estimated from changes in the water temperature and to order the flocculant addition device to add the flocculant.

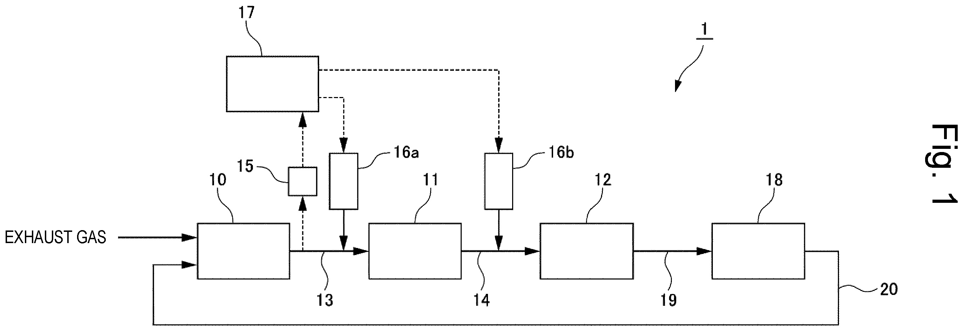

Figures 1 to 5 are each a schematic diagram of an apparatus for treating converter exhaust gas dust-collected water according to an embodiment of the present invention. In any of the following Figures 1 to 5, the arrows in solid lines represent material flows, and the arrows in broken lines represent flows of information (electrical signals or the like).

The apparatus for treating converter exhaust gas dust-collected water 1 depicted in Figure 1 includes mainly a wet dust collector 10 configured to obtain dust-collected water containing dust by wet dust collection from a converter exhaust gas, a coarse particle separator 11 configured to separate coarse dust from the dust-collected water, a thickener 12 for coagulation and settlement by adding a precipitant, a first flow path 13 allowing the dust-collected water to flow from the outlet of the wet dust collector to a position within the coarse particle separator, a second flow path 14 allowing the dust-collected water to flow from the outlet of the coarse particle separator 11 to a position within the thickener 12, a thermometer 15 to measure the water temperature of the dust-collected water at a position of the first flow path 13, flocculant addition devices 16a and 16b configured to add a flocculant into the dust-collected water at at least one position of the first flow path 13 and the second flow path 14, and a controller 17 configured to calculate the concentration of the flocculant appropriate to the amount of dust in the dust-collected water estimated from changes in the water temperature and to order the flocculant addition devices 16a and 16b to add the flocculant. The apparatus for treating converter exhaust gas dust-collected water 1 also includes a treated water tank 18 in which the treated water is stored after coagulation and settlement, a third flow path 19 allowing the treated water to flow from the outlet of the thickener 12 to a position within the treated water tank 18, and a fourth flow path 20 allowing the treated water to flow from the outlet of the treated water tank 18 to a position within the wet dust collector 10.

Converter exhaust gas discharged by the operation of a converter is, first, introduced into the wet dust collector 10 and subjected to wet dust collection. This wet dust collection produces dust-collected water containing dust. The dust-collected water thus obtained is introduced into the coarse particle separator 11 through the first flow path 13, and the coarse particle separator 11 separates coarse dust from the dust-collected water. Then, the dust-collected water is delivered to the thickener 12 through the second flow path 14, and the dust is subjected to coagulation and settlement in the thickener. The treated water thus obtained is stored in the treated water tank 18 through the third flow path 19 and, as required, returned to the wet dust collector 10 through the fourth flow path 20.

In the wet dust collector 10 depicted in Figure 1, the thermometer 15 measures the water temperature in the first flow path 13, and a flocculant is added in a concentration appropriate to the amount of dust in the dust-collected water estimated from changes in the water temperature into the dust-collected water at each of a position of the first flow path 13 and a position of the second flow path 14. For adding the flocculant at each of a position of the first flow path 13 and a position of the second flow path 14 using the flocculant addition devices 16a and 16b, the amount of dust in the dust-collected water is determined based on changes in the water temperature of the dust-collected water measured with the thermometer 15 in the first flow path. The determined amount of dust in the dust-collected water is used to control the concentration of the flocculant to be added at each of a position of the first flow path 13 and a position of the second flow path 14.

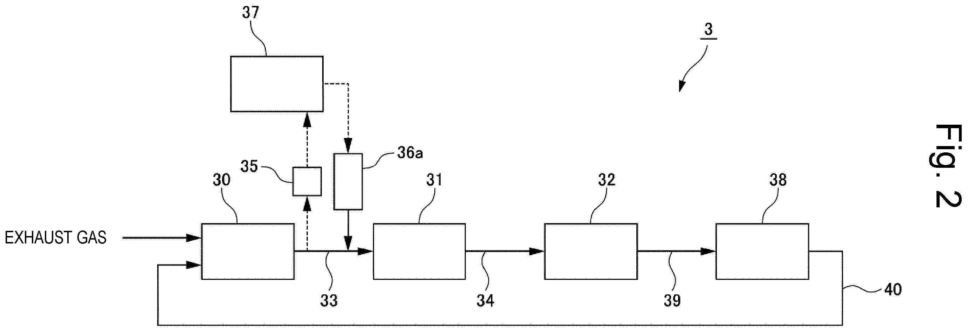

Although Figure 1 illustrates an implementation example of controlling the concentration of the flocculant to be added from the flocculant addition devices 16a and 16b (at each of a position of the first flow path 13 and a position of the second flow path 14) according to the measurement result of the dust-collected water temperature, the flocculant addition device may be disposed at at least either a position of the first flow path or a position of the second flow path, and at least one of the flocculant addition devices can be controlled according to the measurement result of the dust-collected water temperature. When one of the flocculant addition devices is controlled according to the measurement result of the dust-collected water temperature, the other may add the flocculant in a constant concentration without being controlled. Specific implementations will be described with reference to Figures 2 to 4.

The apparatus for treating converter exhaust gas dust-collected water 3 depicted in Figure 2 includes mainly a wet dust collector 30, a coarse particle separator 31, a thickener 32, a first flow path 33, a second flow path 34, a thermometer 35, a flocculant addition device 36a, and a controller 37. The apparatus for treating converter exhaust gas dust-collected water 3 also includes a treated water tank 38, a third flow path 39, and a fourth flow path 40.

In the wet dust collector 30 depicted in Figure 2, the thermometer 35 measures the water temperature in the first flow path 33, and a flocculant is added in a concentration appropriate to the amount of dust in the dust-collected water estimated from changes in the water temperature into the dust-collected water at a position of only the first flow path 33, using the flocculant addition device 36a.

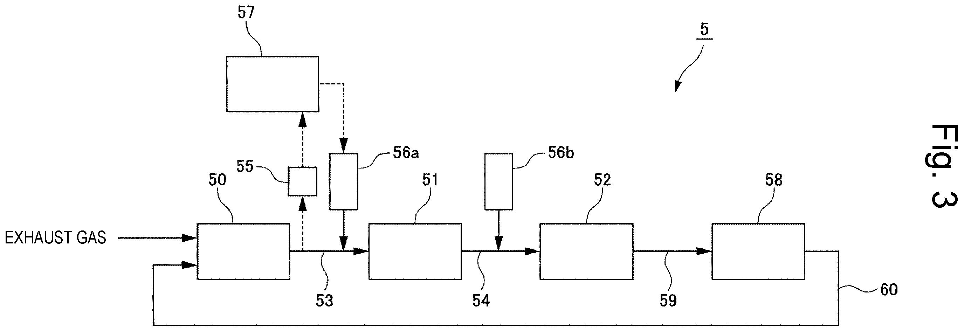

The apparatus for treating converter exhaust gas dust-collected water 5 depicted in Figure 3 includes mainly a wet dust collector 50, a coarse particle separator 51, a thickener 52, a first flow path 53, a second flow path 54, a thermometer 55, a flocculant addition device 56a and 56b, and a controller 57. The apparatus for treating converter exhaust gas dust-collected water 5 also includes a treated water tank 58, a third flow path 59, and a fourth flow path 60.

In the wet dust collector 50 depicted in Figure 3, the thermometer 55 measures the water temperature in the first flow path 53, and a flocculant is added in a concentration appropriate to the amount of dust in the dust-collected water estimated from changes in the water temperature into the dust-collected water at a position of only the first flow path 53, using the flocculant addition device 56a. The flocculant addition device 56b adds the flocculant into the dust-collected water in the second flow path 54 in a concentration independent of the water temperature measurement result.

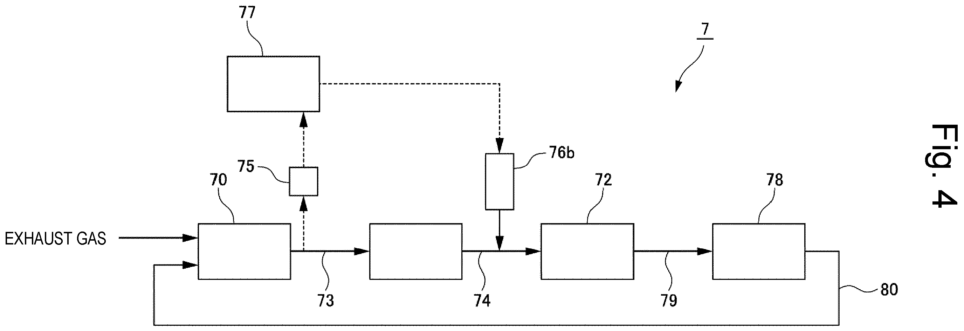

The apparatus for treating converter exhaust gas dust-collected water 7 depicted in Figure 4 includes mainly a wet dust collector 70, a coarse particle separator 71, a thickener 72, a first flow path 73, a second flow path 74, a thermometer 75, a flocculant addition device 76b, and a controller 77. The apparatus for treating converter exhaust gas dust-collected water 70 also includes a treated water tank 78, a third flow path 79, and a fourth flow path 80.

In the wet dust collector 70 depicted in Figure 4, the thermometer 75 measures the water temperature in the first flow path 73, and a flocculant is added in a concentration appropriate to the amount of dust in the dust-collected water estimated from changes in the water temperature into the dust-collected water at a position of only the second flow path 74, using the flocculant addition device 76b.

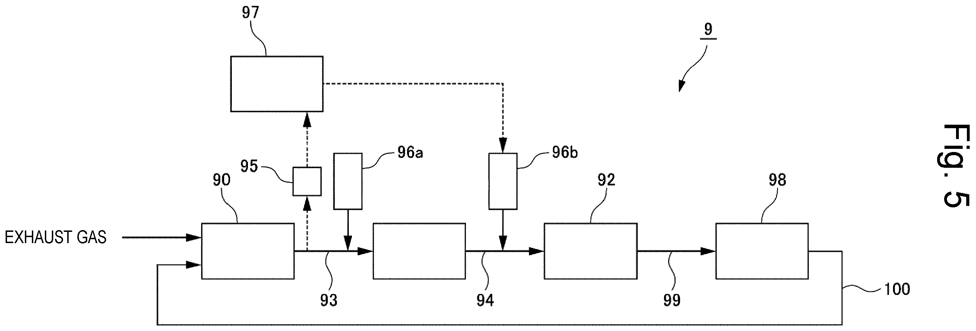

The apparatus for treating converter exhaust gas dust-collected water 9 depicted in Figure 5 includes mainly a wet dust collector 90, a coarse particle separator 91, a thickener 92, a first flow path 93, a second flow path 94, a thermometer 95, a flocculant addition device 96a and 96b, and a controller 97. The apparatus for treating converter exhaust gas dust-collected water 9 also includes a treated water tank 98, a third flow path 99, and a fourth flow path 90.

In the wet dust collector 9 depicted in Figure 5, the thermometer 95 measures the water temperature in the first flow path 93, and a flocculant is added in a concentration appropriate to the amount of dust in the dust-collected water estimated from changes in the water temperature into the dust-collected water at a position of only the second flow path 94, using the flocculant addition device 96b. The flocculant addition device 36a adds the flocculant into the dust-collected water in the first flow path 93, for example, in a predetermined amount, without controlling a concentration in accordance with by the water temperature measurement result.

The positions of the thermometer and the flocculant adding portion(s) that determines the concentration to be added based on the result of water temperature measurement with the thermometer are not particularly limited. Preferably, the thermometer is disposed upstream from the flocculant adding portion in the flow of the dust-collected water.

For adding the flocculant at two or more positions, as depicted in implementation examples in Figures 1, 3, and 5, the flocculants may be the same or different between or among the positions.

For adding the flocculant at the first flow path, the flocculant is preferably added for example in a concentration in the range of 0 mg/L (including the case of no addition) to 2 mg/L at water temperatures lower than the threshold, and in a concentration in the range of 3 mg/L to 6 mg/L, more preferably more than 4 mg/L and 6 mg/L or less, at water temperatures equal to or higher than the threshold. Thus, when the water temperature is lower than a threshold, a small amount of the flocculant is added to dust at a low content, consequently reducing the flocculant cost. Also, when the water temperature is equal to or higher than the threshold, the dust can be sufficiently coagulated and efficiently separated. The threshold may be 42°C to 50°C, for example, 45°C.

For adding the flocculant at the second flow path, the flocculant is preferably added for example in a concentration in the range of 0 mg/L (including the case of no addition) to 3 mg/L at water temperatures lower than the threshold, and in a concentration in the range of 5 mg/L to 15 mg/L, more preferably 5 mg/L to 10 mg/L, at water temperatures equal to or higher than the threshold. Thus, when the water temperature is lower than a threshold, a small amount of the flocculant is added to dust at a low content, consequently reducing the flocculant cost. Also, when the water temperature is 45°C or more, the dust can be sufficiently coagulated and efficiently separated. The threshold may be 42°C to 50°C, for example, 45°C.

Although the method for treating converter exhaust gas dust-collected water using any of the converter exhaust gas dust collectors 1, 3, 5, 7, and 9 has been described above, all the operations in the method for treating converter exhaust gas dust-collected water according to an embodiment of the present invention may be automated using a controller, computer or the like, or manually conducted by an operator.

While an aspect of the present invention has been described above in detail using specific implementations, the invention may be embodied with appropriate modifications as defined by the claims provided that the modifications do not interfere with the advantageous effects of the invention.

### EXAMPLES

The present invention will now be further described in detail with reference to Examples but is not limited to the Examples.

### <Experiment 1: Changes in Water Temperature of Dust-Collected with Time>

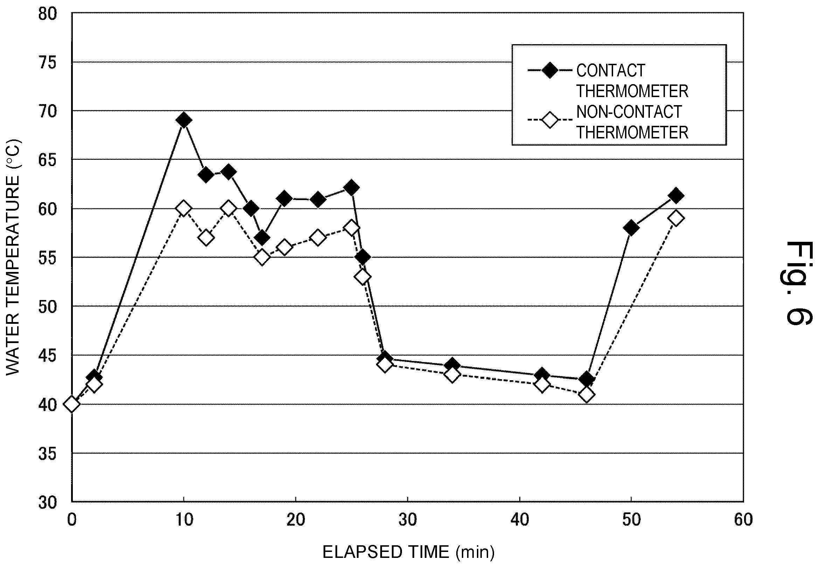

The water temperature of dust-collected water containing dust obtained by wet dust collection from a converter exhaust gas in an ironworks was measured with time with a contact thermometer (ONDOTORI TR-71, manufactured by T&D Corporation) and a non-contact thermometer (PT-5LD, manufactured by OPTEX FA CO., LTD.). Figure 6 is a graph showing changes with time in water temperature of dust-collected measured with a contact thermometer and a non-contact thermometer. Figure 6 shows that while the non-contact thermometer has errors at high temperatures, the contact and non-contact thermometers exhibit substantially the same tendency and can measure the temperature of the dust-collected water.

### <Experiment 2: Relationship between the Water Temperature and the Dust Concentration of Dust-Collected Water>

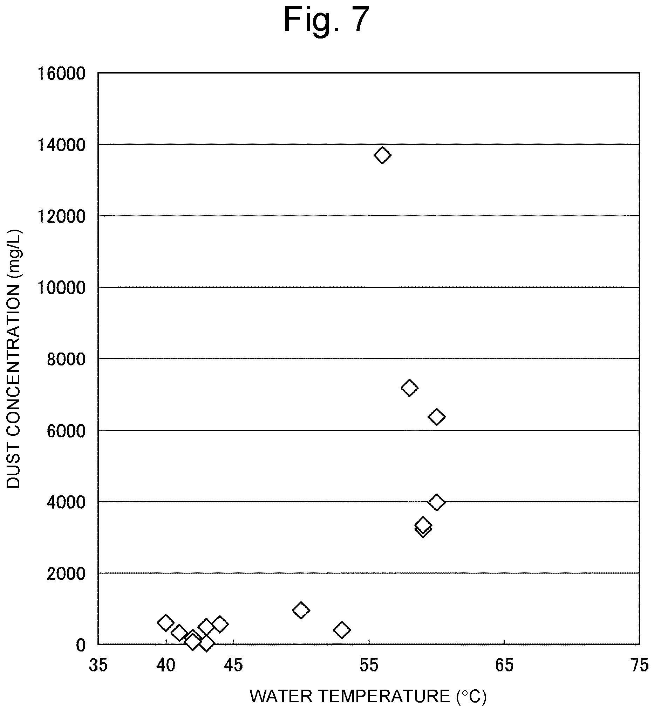

The water temperature and the dust concentration of the dust-collected water containing dust obtained by wet dust collection from a converter exhaust gas in an ironworks were measured. Figure 7 is a graph showing the relationship between the water temperature and the dust concentration of the dust-collected water. Figure 7 shows that when the water temperature of the dust-collected water exceeds 45°C, the dust in the dust-collected water is likely to become large, and in particular, when the water temperature is 55°C or more, the dust concentration increases significantly.

### <Experiment 3: Relationship at Different Dust-Collected Water Temperatures between the Concentration of Flocculant to be Added and the Concentration of Dust Collected>

Dust-collected water with a temperature of 60°C and dust-collected water with a temperature of 40°C were each collected in 500 mL beakers from dust-collected water containing dust obtained by wet dust collection from a converter exhaust gas in an ironworks, and a flocculant KURILINE M-413, manufactured by Kurita Water Industries Ltd., was added in varying concentrations. The temperatures were measured with a contact thermometer. Table 1 presents the water temperatures of dust-collected waters, concentration of the flocculant (agent) added to the dust-collected waters, the dust concentration before the test, and the amount of dust collected per liter of dust-collected water.

**[Table 1]**

| | Dust-collected water temperature (°C) | Agent concentration (mg/L) | Dust concentration before test (mg/L) | Amount of dust collected per liter of dust-collected water (mg/L-dust-collected water) |
|---|---|---|---|---|
| Test 1 | 60 | 0 (not added) | 65100 | 2520 |
| Test 2 | | 2 | | 2240 |
| Test 3 | | 5 | | 3700 |
| Test 4 | | 10 | | 5800 |
| Test 5 | | 15 | | 4980 |
| Test 6 | 40 | 1 | 224 | 116 |
| Test 7 | | 3 | | 180 |
| Test 8 | | 5 | | 137 |

Table 1 above suggests that, in the treatment of converter exhaust gas dust-collected water, dust can be efficiently separated from the dust-collected water by measuring the temperature of the dust-collected water and adding a flocculant, into the dust-collected water, in a concentration appropriate to the amount of dust in the dust-collected water estimated from changes in the water temperature of the dust-collected water.

### Reference Signs List

1, 3, 5, 7, 9 apparatus for treating converter exhaust gas dust-collected water 1
10, 30, 50, 70, 90 wet dust collector
11, 31, 51, 71, 91 coarse particle separator
12, 32, 52, 72, 92 thickener
13, 33, 53, 73, 93 first flow path
14, 34, 54, 74, 94 second flow path
15, 35, 55, 75, 95 thermometer
16a, 16b, 36a, 56a, 56b, 76b, 96a, 96b flocculant addition device
17, 37, 57, 77, 97 controller
18, 38, 58, 78, 98 treated water tank
19, 39, 59, 79, 99 third flow path
20, 40, 60, 80, 100 fourth flow path

## Claims

1. A method for treating converter exhaust gas dust-collected water, the method being **characterized by** comprising:
estimating in advance a relationship between an amount of dust removed and a concentration of a flocculant to be added, for each water temperature of dust-collected water containing dust obtained by wet dust collection from a converter exhaust gas,
measuring the water temperature of the dust-collected water,
calculating, for the measured water temperature of the dust-collected water, a minimum concentration of the flocculant at which the dust in the dust-collected water can be maximumly removed, based on the relationship, and
adding the flocculant into the dust-collected water at the minimum concentration.

2. The method for treating converter exhaust gas dust-collected water according to claim 1, the method comprising:
separating coarse dust, in a coarse particle separator (11; 31; 51; 71; 91), from the dust-collected water containing dust obtained by wet dust collection from a converter exhaust gas with a wet dust collector (10; 30; 50; 70; 90), followed by coagulation and settlement in a thickener (12; 32; 52; 72; 92),
estimating in advance the relationship between an amount of dust removed and the concentration of the flocculant to be added, for each water temperature obtained by treating a converter exhaust gas with the wet dust collector (10; 30; 50; 70; 90),
measuring the water temperature of the dust-collected water at a position of a first flow path (13; 33; 53; 73; 93) allowing the dust-collected water to flow from an outlet of the wet dust collector (10; 30; 50; 70; 90) to a position within the coarse particle separator (11; 31; 51; 71; 91);
calculating the minimum concentration, and
adding the flocculant at the minimum concentration into the dust-collected water at a position selected from at least one position of the first flow path (13; 33; 53; 73; 93) and at least one position of a second flow path (14; 34; 54; 74; 94), wherein the second flow path (14; 34; 54; 74; 94) is from an outlet of the coarse particle separator (11; 31; 51; 71; 91) to a position within the thickener (12; 32; 52; 72; 92).

3. The method for treating converter exhaust gas dust-collected water according to claim 1 or 2, wherein the water temperature of the dust-collected water is measured with a non-contact thermometer (15; 35; 55; 75; 95).

4. The method for treating converter exhaust gas dust-collected water according to any one of claims 1, 2, and 3, wherein the minimum concentration of the flocculant to be added to the dust-collected water is higher when the water temperature of the dust-collected water falls within a temperature range equal to or higher than a threshold than when the water temperature of the dust-collected water falls within a temperature range lower than a threshold.

5. An apparatus (1; 3; 5; 7; 9) for treating converter exhaust gas dust-collected water, the apparatus (1; 3; 5; 7; 9) comprising:
a wet dust collector (10; 30; 50; 70; 90) configured to obtain dust-collected water containing dust by wet dust collection from a converter exhaust gas;
a flocculant addition device (16a; 16b; 36a; 56a; 56b; 76b; 96a; 96b) configured to add a flocculant into the dust-collected water; and
**characterized in that** the apparatus (1; 3; 5; 7; 9) further comprises
a thermometer (15; 35; 55; 75; 95) to measure a water temperature of the dust-collected water;
a controller (17; 37; 57; 77; 97) configured to calculate, for the measured water temperature of the dust-collected water, a minimum concentration of the flocculant at which dust in the dust-collected water can be maximumly removed, based on a relationship between an amount of the dust removed and a concentration of the flocculant to be added, the relationship being estimated in advance for each water temperature of the dust-collected water, and instruct the flocculant addition device (16a; 16b; 36a; 56a; 56b; 76b; 96a; 96b) to add the flocculant at the minimum concentration.

6. The apparatus (1; 3; 5; 7; 9) for treating converter exhaust gas dust-collected water according to claim 5, the apparatus (1; 3; 5; 7; 9) further comprising:
a coarse particle separator (11; 31; 51; 71; 91) configured to separate coarse dust from the dust-collected water;
a thickener (12; 32; 52; 72; 92) for coagulation and settlement;
a first flow path (13; 33; 53; 73; 93) allowing the dust-collected water to flow from an outlet of the wet dust collector (10; 30; 50; 70; 90) to a position within the coarse particle separator (11; 31; 51; 71; 91);
a second flow path (14; 34; 54; 74; 94) allowing the dust-collected water to flow from an outlet of the coarse particle separator (11; 31; 51; 71; 91) to a position within the thickener (12; 32; 52; 72; 92);
wherein the thermometer (15; 35; 55; 75; 95) to measure the water temperature of the dust-collected water is provided at a position of the first flow path (13; 33; 53; 73; 93); and
the flocculant addition device (16a; 16b; 36a; 56a; 56b; 76b; 96a; 96b) is configured to add the flocculant into the dust-collected water at a position selected from at least one position of the first flow path (13; 33; 53; 73; 93) and at least one position of the second flow path (14; 34; 54; 74; 94).

## Patentansprüche

1. Verfahren zur Behandlung von Konverterabgas-Staubabscheidungswasser, wobei das Verfahren **dadurch gekennzeichnet ist, dass** es umfasst:
vorab-Abschätzen einer Beziehung zwischen einer Menge an entferntem Staub und einer Konzentration eines zuzusetzenden Flockungsmittels für jede Wassertemperatur von Staubabscheidungswasser, das durch Nassstaubabscheidung aus einem Konverterabgas erhalten ist,
Messen der Wassertemperatur des Staubabscheidungswassers,
Berechnen einer Mindestkonzentration des Flockungsmittels, bei der der Staub im Staubabscheidungswasser maximal entfernt werden kann, basierend auf der Beziehung, für die gemessene Wassertemperatur des Staubabscheidungswassers, und
Zugeben des Flockungsmittels in das Staubabscheidungswasser in der Mindestkonzentration.

2. Verfahren zur Behandlung von Konverterabgas-Staubabscheidungswasser nach Anspruch 1, wobei das Verfahren umfasst:
Abscheiden von grobem Staub in einem Grobteilchen-Separator (11; 31; 51; 71; 91) aus dem Staubabscheidungswasser, das Staub enthält, der durch Nassstaubabscheidung aus einem Konverterabgas mit einem Nassstaubabscheider (10; 30; 50; 70; 90) erhalten ist, und anschließender Koagulation und Absetzung in einem Eindicker (12; 32; 52; 72; 92),
vorab-Abschätzen der Beziehung zwischen einer entfernten Staubmenge und der Konzentration des zuzusetzenden Flockungsmittels für jede Wassertemperatur, die durch die Behandlung eines Konverterabgases mit dem Nassstaubabscheider (10; 30; 50; 70; 90) erhalten ist,
messen der Wassertemperatur des Staubabscheidungswassers an einer Stelle eines ersten Strömungswegs (13; 33; 53; 73; 93), der es dem Staubabscheidungswasser ermöglicht, aus einem Auslass des Nassstaubabscheiders (10; 30; 50; 70; 90) zu einer Position innerhalb des Grobteilchen-Separators (11; 31; 51; 71; 91) zu strömen;
Berechnen der Mindestkonzentration, und
Zugabe des Flockungsmittels in der Mindestkonzentration zu dem Staubabscheidungswasser an einer Stelle, die ausgewählt ist aus zumindest einer Stelle des ersten Strömungswegs (13; 33; 53; 73; 93) und zumindest einer Stelle eines zweiten Strömungswegs (14; 34; 54; 74; 94), wobei der zweite Strömungsweg (14; 34; 54; 74; 94) von einem Auslass des Grobteilchen-Separators (11; 31; 51; 71; 91) zu einer Position innerhalb des Eindickers (12; 32; 52; 72; 92) führt.

3. Verfahren zur Behandlung von Konverterabgas-Staubabscheidungswasser nach Anspruch 1 oder 2, wobei die Wassertemperatur des Staubabscheidungswassers mit einem berührungslosen Thermometer (15; 35; 55; 75; 95) gemessen wird.

4. Verfahren zur Behandlung von Konverterabgas-Staubabscheidungswasser nach einem der Ansprüche 1, 2 und 3, wobei die Mindestkonzentration des dem Staubabscheidungswasser zuzusetzenden Flockungsmittels höher ist, wenn die Wassertemperatur des Staubabscheidungswassers in einen Temperaturbereich fällt, der gleich oder höher als ein Schwellenwert ist, als wenn die Wassertemperatur des Staubabscheidungswassers in einen Temperaturbereich fällt, der niedriger als ein Schwellenwert ist.

5. Apparat (1; 3; 5; 7; 9) zur Behandlung von Konverterabgas-Staubabscheidungswasser, wobei der Apparat (1; 3; 5; 7; 9) umfasst:
einen Nassstaubabscheider (10; 30; 50; 70; 90), der so konfiguriert ist, dass er Staub enthaltendes Staubabscheidungswasser durch Nassstaubabscheidung aus einem Konverterabgas erhält;
eine Flockungsmittel-Zuführvorrichtung (16a; 16b; 36a; 56a; 56b; 76b; 96a; 96b), die so konfiguriert ist, dass sie in das Staubabscheidungswasser ein Flockungsmittel zugibt; und
**dadurch gekennzeichnet, dass** der Apparat (1; 3; 5; 7; 9) ferner umfasst:
ein Thermometer (15; 35; 55; 75; 95) zum Messen einer Wassertemperatur des Staubabscheidungswassers;
eine Steuereinrichtung (17; 37; 57; 77; 97), die so konfiguriert ist, dass sie für die gemessene Wassertemperatur des Staubabscheidungswassers auf der Grundlage einer Beziehung zwischen einer Menge des entfernten Staubs und einer zuzusetzenden Konzentration des Flockungsmittels eine Mindestkonzentration des Flockungsmittels, bei der Staub in dem Staubabscheidungswassers maximal entfernt werden kann, berechnet, wobei die Beziehung im Voraus für jede Wassertemperatur des Staubabscheidungswassers geschätzt wird, und die Flockungsmittelzufügungsvorrichtung (16a; 16b; 36a; 56a; 56b; 76b; 96a; 96b) anweist, das Flockungsmittel in der Mindestkonzentration zuzusetzen.

6. Apparat (1; 3; 5; 7; 9) zur Behandlung von Konverterabgas-Staubabscheidungswasser nach Anspruch 5, wobei der Apparat (1; 3; 5; 7; 9) ferner umfasst:
einen Grobteilchen-Separator (11; 31; 51; 71; 91), der so konfiguriert ist, dass er groben Staub aus dem Staubabscheidungswasser abtrennt;
einen Eindicker (12; 32; 52; 72; 92) zum Koagulieren und Absetzen;
einen ersten Strömungsweg (13; 33; 53; 73; 93), der es dem Staubabscheidungswasser ermöglicht, von einem Auslass des Nassstaubabscheiders (10; 30; 50; 70; 90) zu einer Position innerhalb des Grobteilchen-Separators (11; 31; 51; 71; 91) zu strömen;
einen zweiten Strömungsweg (14; 34; 54; 74; 94), der es dem Staubabscheidungswasser ermöglicht, von einem Auslass des Grobteilchen-Separators (11; 31; 51; 71; 91) zu einer Position innerhalb des Eindickers (12; 32; 52; 72; 92) zu strömen;
wobei das Thermometer (15; 35; 55; 75; 95) zum Messen der Wassertemperatur des Staubabscheidungswassers an einer Position des ersten Strömungswegs (13; 33; 53; 73; 93) vorgesehen ist; und
die Flockungsmittel-Zuführvorrichtung (16a; 16b; 36a; 56a; 56b; 76b; 96a; 96b) so konfiguriert ist, dass sie das Flockungsmittel dem Staubabscheidungswasser an einer Position zufügt, die aus zumindest einer Position des ersten Strömungswegs (13; 33; 53; 73; 93) und zumindest einer Position des zweiten Strömungswegs (14; 34; 54; 74; 94) ausgewählt ist.

## Revendications

1. Procédé de traitement d'eau chargée en poussières de gaz d'échappement de convertisseur, le procédé étant **caractérisé en ce qu'**il comprend :
l'estimation à l'avance d'une relation entre une quantité de poussières éliminées et une concentration d'un floculant à ajouter, pour chaque température d'eau d'une eau chargée en poussières contenant des poussières, obtenue par dépoussiérage humide à partir d'un gaz d'échappement de convertisseur,
la mesure de la température d'eau de l'eau chargée en poussières,
le calcul, pour la température d'eau mesurée de l'eau chargée en poussières, d'une concentration minimale du floculant à laquelle les poussières dans l'eau chargée en poussières peuvent être éliminées au maximum, sur la base de la relation, et
l'ajout du floculant dans l'eau chargée en poussières à la concentration minimale.

2. Procédé de traitement d'eau chargée en poussières de gaz d'échappement de convertisseur selon la revendication 1, le procédé comprenant :
la séparation des poussières grossières, dans un séparateur de particules grossières (11 ; 31 ; 51; 71; 91), de l'eau chargée en poussières contenant des poussières, obtenue par dépoussiérage humide à partir d'un gaz d'échappement de convertisseur avec un dépoussiéreur humide (10 ; 30 ; 50 ; 70 ; 90), suivie d'une coagulation et d'une décantation dans un épaississeur (12 ; 32 ; 52 ; 72 ; 92),
l'estimation à l'avance de la relation entre une quantité de poussières éliminées et la concentration du floculant à ajouter, pour chaque température d'eau obtenue par traitement d'un gaz d'échappement de convertisseur avec le dépoussiéreur humide (10 ; 30 ; 50 ; 70 ; 90),
la mesure de la température d'eau de l'eau chargée en poussières à une position d'un premier passage (13 ; 33 ; 53 ; 73 ; 93) permettant à l'eau chargée en poussières de s'écouler depuis une sortie du dépoussiéreur humide (10 ; 30 ; 50 ; 70 ; 90) jusqu'à une position à l'intérieur du séparateur de particules grossières (11 ; 31 ; 51 ; 71 ; 91),
le calcul de la concentration minimale, et
l'ajout du floculant à la concentration minimale dans l'eau chargée en poussières à une position choisie parmi au moins une position du premier passage (13 ; 33 ; 53 ; 73 ; 93) et au moins une position d'un deuxième passage (14 ; 34 ; 54 ; 74 ; 94), le deuxième passage (14 ; 34 ; 54 ; 74 ; 94) allant d'une sortie du séparateur de particules grossières (11 ; 31 ; 51 ; 71 ; 91) à une position à l'intérieur de l'épaississeur (12 ; 32 ; 52 ; 72 ; 92).

3. Procédé de traitement d'eau chargée en poussières de gaz d'échappement de convertisseur selon la revendication 1 ou 2, dans lequel la température d'eau de l'eau chargée en poussières est mesurée avec un thermomètre sans contact (15 ; 35 ; 55 ; 75 ; 95).

4. Procédé de traitement d'eau chargée en poussières de gaz d'échappement de convertisseur selon l'une quelconque des revendications 1, 2 et 3, dans lequel la concentration minimale du floculant à ajouter à l'eau chargée en poussières est plus élevée lorsque la température d'eau de l'eau chargée en poussières se situe dans une plage de température égale ou supérieure à un seuil que lorsque la température d'eau de l'eau chargée en poussières se situe dans une plage de température inférieure à un seuil.

5. Appareil (1; 3 ; 5 ; 7 ; 9) destiné à traiter de l'eau chargée en poussières de gaz d'échappement de convertisseur, l'appareil (1 ; 3 ; 5 ; 7 ; 9) comprenant :
un dépoussiéreur humide (10 ; 30 ; 50 ; 70 ; 90) conçu pour obtenir de l'eau chargée en poussières contenant des poussières par dépoussiérage humide à partir d'un gaz d'échappement du convertisseur ;
un dispositif d'ajout de floculant (16a ; 16b ; 36a ; 56a ; 56b ; 76b ; 96a ; 96b) conçu pour ajouter un floculant dans l'eau chargée en poussières ; et
**caractérisé en ce que** l'appareil (1 ; 3 ; 5 ; 7 ; 9) comprend en outre
un thermomètre (15 ; 35 ; 55 ; 75 ; 95) pour mesurer une température d'eau de l'eau chargée en poussières ;
un contrôleur (17 ; 37 ; 57 ; 77 ; 97) conçu pour calculer, pour la température d'eau mesurée de l'eau chargée en poussières, une concentration minimale du floculant à laquelle les poussières dans l'eau chargée en poussières peuvent être éliminées au maximum, sur la base d'une relation entre une quantité des poussières éliminées et une concentration du floculant à ajouter, la relation étant estimée à l'avance pour chaque température d'eau de l'eau chargée en poussières, et donner l'instruction au dispositif d'ajout de floculant (16a ; 16b ; 36a ; 56a ; 56b ; 76b ; 96a ; 96b) d'ajouter le floculant à la concentration minimale.

6. Appareil (1; 3 ; 5 ; 7 ; 9) destiné à traiter de l'eau chargée en poussières de gaz d'échappement de convertisseur selon la revendication 5, l'appareil (1 ; 3 ; 5 ; 7 ; 9) comprenant en outre :
un séparateur de particules grossières (11 ; 31 ; 51 ; 71 ; 91) conçu pour séparer les poussières grossières de l'eau chargée en poussières ;
un épaississeur (12 ; 32 ; 52 ; 72 ; 92) pour la coagulation et la décantation ;
un premier passage (13 ; 33 ; 53 ; 73 ; 93) permettant à l'eau chargée en poussières de s'écouler depuis une sortie du dépoussiéreur humide (10 ; 30 ; 50 ; 70 ; 90) jusqu'à une position à l'intérieur du séparateur de particules grossières (11 ; 31 ; 51 ; 71 ; 91) ;
un deuxième passage (14 ; 34 ; 54 ; 74 ; 94) permettant à l'eau chargée en poussières de s'écouler depuis une sortie du séparateur de particules grossières (11 ; 31 ; 51 ; 71 ; 91) jusqu'à une position à l'intérieur de l'épaississeur (12 ; 32 ; 52 ; 72 ; 92) ;
dans lequel le thermomètre (15 ; 35 ; 55 ; 75 ; 95) pour mesurer la température d'eau de l'eau chargée en poussières est placé à une position du premier passage (13 ; 33 ; 53 ; 73 ; 93) ; et
le dispositif d'ajout de floculant (16a; 16b ; 36a ; 56a ; 56b ; 76b ; 96a ; 96b) est conçu pour ajouter le floculant dans l'eau chargée en poussières à une position choisie parmi au moins une position du premier passage (13 ; 33 ; 53 ; 73 ; 93) et au moins une position du deuxième passage (14 ; 34 ; 54 ; 74 ; 94).
